# FASCICULE DE BREVET EUROPEEN

(11) **EP 2 235 415 B1**
(45) Date de publication et mention de la délivrance du brevet: **21.03.2018**
(21) Numéro de dépôt: 08872064.4
(22) Date de dépôt: 03.12.2008
(51) Int. Cl.: F16L 3/10, B60R 16/03

(54) **SYSTEME FORMANT LIAISON ELECTRIQUE DANS UN VEHICULE AUTOMOBILE, NOTAMMENT ENTRE LA BATTERIE ET L'ARRIERE DU VEHICULE**
ELEKTRISCHES VERBINDUNGSSYSTEM IN EINEM KRAFTFAHRZEUG, INSBESONDERE ZWISCHEN DER BATTERIE UND DEM HECKBEREICH DES KRAFTFAHRZEUGES
SYSTEM FORMING AN ELECTRIC LINK IN A MOTOR VEHICLE, PARTICULARLY BETWEEN THE BATTERY AND THE REAR OF THE VEHICLE

(30) Priorité: 21.12.2007 FR 0709013
(43) Date de publication de la demande: 06.10.2010
(73) Titulaire: Leoni Wiring Systems France, 78180 Montigny le Bretonneux (FR)
(72) Inventeur: HENRY, Koupaïa, F-78390 Bois d'Arcy (FR); MOLY, José, F-31150 Gratentour (FR); ROULAND, Hervé, F-78310 Maurepas (FR)
(74) Mandataire: Eidelsberg, Olivier Nathan
(86) Numéro de dépôt international: PCT/FR2008/001685
(87) Numéro de publication internationale: WO 2009/098413

(56) Documents cités:
- EP-A- 1 014 529
- EP-A- 1 586 487
- DE-A1- 10 220 303
- DE-A1- 10 320 437
- US-A1- 2003 236 016
- US-B1- 6 700 795

## Description

La présente invention se rapporte à un système formant liaison électrique entre des premier et deuxième points d'un véhicule automobile, notamment entre le moteur et une batterie se trouvant dans le coffre arrière du véhicule. La présente invention se rapporte également à un véhicule automobile comportant un système de ce genre.

Aujourd'hui, les systèmes formant liaison entre deux points éloignés d'un véhicule automobile, notamment entre le moteur et une batterie à l'arrière du véhicule automobile, sont constitués de câbles souples qui sont logés sur tout le long du trajet dans une ou des goulottes, la ou les goulottes étant, en outre, maintenues en différents points d'une ou de parois le long de laquelle ou desquelles s'étendent les câbles par des agrafes.

De US 2003/0236016 A, qui divulgue le préambule de la revendication 1, il est connu un système de liaison entre deux points à courte distance d'un véhicule automobile, entre deux points à l'intérieur du compartiment moteur.

De DE 10220303 il est connu un système de liaison entre deux points à grande distance l'un de l'autre d'un véhicule automobile, qui comporte deux tôles s'étendant chacune suivant un trajet respectif entre les deux points en ayant un trajet en commun.

Dans ces systèmes de l'art antérieur, les câbles sont des tubes creux non rigides facilement pliables. En outre, il est prévu une sorte d'agrafe d'isolation électrique pour aider à l'installation mais qui ne sert pas à maintenir les câbles lors de l'utilisation, cette agrafe pouvant être enlevée et n'étant pas nécessaire.

La présente invention vise à surmonter les inconvénients de l'art antérieur en proposant un système de liaison entre deux points à grande distance l'un de l'autre d'un véhicule automobile, notamment entre le moteur et une batterie à l'arrière du véhicule, qui comporte au moins deux câbles s'étendant chacun suivant un trajet respectif entre les deux points en ayant au moins des tronçons de trajet en commun, qui ne nécessite pas de prévoir des goulottes pour recevoir les câbles et qui pourtant assure une grande fiabilité de la liaison électrique au cours du temps d'utilisation du véhicule.

Suivant l'invention, un système de liaison est tel que défini à la revendication 1. Des perfectionnements et modes de réalisation préférés sont définis aux sous revendications.

En prévoyant des manchons de rigidification disposés le long de l'extension des câbles, on évite que ceux-ci ne fléchissent et détériorent la liaison électrique au cours du temps, bien que ces câbles rigides en forme de barreau soient très lourds, notamment en raison du fait qu'ils s'étendent sur une grande distance, par exemple entre le moteur à l'avant et une batterie à l'arrière, c'est-à-dire une distance supérieure à 1 mètre, notamment supérieure à 3 mètres, par exemple comprise entre 3 et 10 mètres.

En outre, même si l'un des barreaux subit une torsion différente par rapport à l'autre barreau le long de leur trajet respectif, leur section transversale reste toujours identiques et des manchons de formes identiques peuvent être utilisées pour maintenir ensemble les deux barreaux le long des tronçons en commun. En particulier, les manchons peuvent comporter deux canaux dont les sections transversales sont circulaires.

On décrit maintenant, à titre d'exemple, un mode de réalisation de l'invention en se reportant aux dessins dans lesquels :
la Figure 1 représente une vue d'ensemble d'un assemblage suivant l'invention ;
la Figure 2 une vue en perspective éclatée d'une partie de l'assemblage de la Figure 1 ;
la Figure 3 une vue en perspective de la partie éclatée de la Figure 1 à l'état assemblé ; et
la Figure 4 est une vue en perspective d'un autre mode de réalisation possible pour l'agrafe de l'assemblage de l'invention.

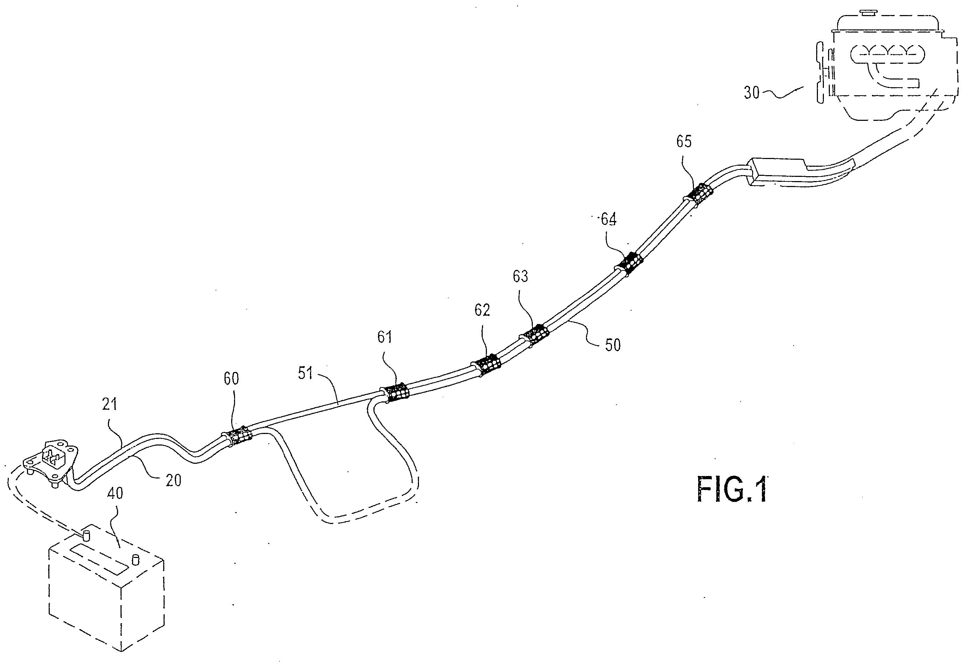

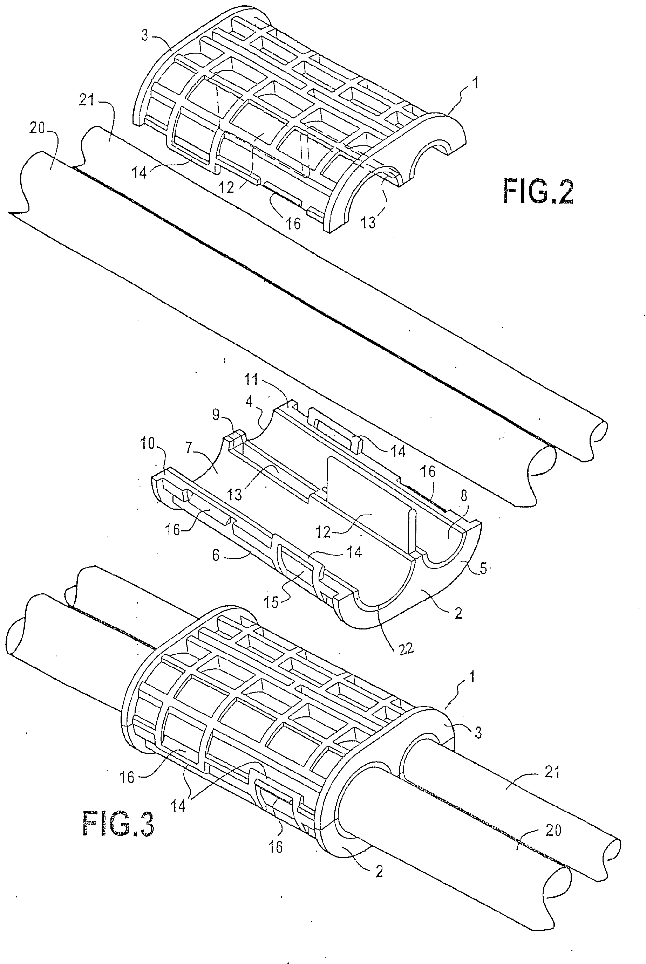

Comme on le voit à la Figure 1, deux barreaux 20 et 21 conducteurs en matériau rigide s'étendent entre le moteur 30 d'un véhicule automobile et une batterie 40 se trouvant à l'arrière du véhicule. Les deux barreaux s'étendent sensiblement mutuellement parallèles sur certains tronçons du parcours 50. Cependant, sur certains tronçons, tels que 51, se trouvant entre deux agrafes 60 et 61, les deux câbles ont des trajets qui s'écartent l'un de l'autre. Des agrafes de maintien et de rigidification de l'ensemble, notamment pour lutter contre la flexion due au fait que les barreaux s'étendent sur une grande longueur, sont prévues le long du parcours des deux barreaux, au niveau des tronçons où les barreaux sont parallèles. Ces agrafes sont référencées 60, 61, 62, 63, 64 et 65. Deux modes de réalisation de ces agrafes sont décrite plus en détail aux Figures 2, 3 et 4 sous la référence numérique 1 ou 1' respectivement. Les deux barreaux sont notamment en aluminium. Ils sont sensiblement rigides. On entend par "sensiblement rigide", un barreau qui est tel que lorsqu'une personne de force moyenne prend le barreau dans ses mains en les mettant en contact l'une avec l'autre au niveau de ses pouces et index, elle ne parvient pas à fléchir le barreau. En particulier, elle ne parvient pas à le fléchir de manière réversible.

A la figure 2, un manchon ou agrafe 1 est constitué d'une première hémi-coquille 2 inférieure et d'une deuxième hémi-coquille 3 supérieure. Les deux première et deuxième hémi-coquilles 2 et 3 sont de forme identique. Chaque hémi-coquille a une longueur et une largeur, la largeur étant la dimension plus grande s'étendant de la gauche vers la droite à la figure. La forme de chaque hémi-coquille est sensiblement la forme d'un demi-cylindre ayant une section transversale demi-elliptique. Chaque hémi-coquille comporte deux faces 4 et 5 latérales une face 6 latérale extérieure et une face 7 intérieure. Deux demi-canaux 8 sont formés dans l'agrafe dans la surface 7 intérieure. Ces deux demi-canaux 8 ont la forme d'un cylindre semi-circulaire de section transversale ayant la forme d'un demi-cercle. La face 7 intérieure de l'hémi-coquille 2 comporte une tranche 9 intermédiaire entre les deux demi-canaux et deux.tranches 10 et 11 latérales. De la tranche 9 intermédiaire est issu un muret 12 s'étendant sensiblement perpendiculairement au plan formé par les tranches 9, 10 et 11. Le muret 12, sensiblement de forme parallélépipédique, s'étend sur sensiblement la moitié de la longueur de la tranche intermédiaire. Sur l'autre moitié de la tranche est formé un évidement 13 ayant une forme sensiblement complémentaire de celle du muret 12. De la tranche 10 latérale et de la tranche 11 latérale fait saillie une anse 14 définissant entre elle et chaque tranche 10 et 11 une fenêtre 15. Il est formé, en outre, issues de chaque tranche 10 et 11, deux pattes 16 d'encliquetage de forme complémentaire de la fenêtre 15. Les deux câbles en forme de barreaux 20, 21 en matériau rigide sont destinés à être reçus dans l'agrafe. Les deux barreaux ont chacun un section transversalement à l'axe longitudinal du barreau en forme de cercle ou disque circulaire.

Comme on le voit à la figure 3, à l'état monté, l'hémi-coquille 2 inférieure est encliquetée dans l'hémi-coquille 3 supérieure de sorte que les deux faces 7 intérieures des deux hémicoquilles viennent l'une contre l'autre et la patte d'encliquetage 16 est insérée dans l'ouverture 15 et vient s'encliqueter contre l'anse 14 et ce des deux côtés latéraux de l'agrafe. Dans le même temps, la patte 16 d'encliquetage de l'hémi-coquille inférieure pénètre dans l'ouverture ou fenêtre 15 de l'hémi-coquille supérieure et vient buter contre l'anse 14 de l'hémi-coquille supérieure pour participer également à la fixation des deux hémi-coquilles l'une avec l'autre.

Dans le même temps, le muret 12 de l'hémi-coquille inférieure a pénétré dans l'ouverture 13 de l'hémi-coquille supérieure, tandis que le muret 12 de l'hémi-coquille supérieure a pénétré dans la cavité 13 de l'hémi-coquille inférieure.

Les parois des canaux ou demi canaux 8 sont recouverts d'une couche 22 de matériau élastomère qui a pour effet, par frottement relatif avec le matériau du ou des barreaux d'éviter toute rotation des barreaux et tout déplacement longitudinal de ceux ci.

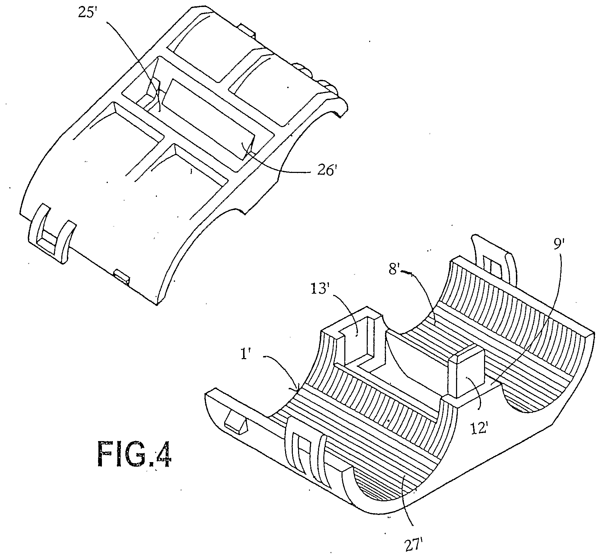

A la figure 4, il est représenté un autre mode de réalisation de l'agrafe. Les parties qui sont identiques ou de même fonctionnalité ou genre que celles du mode de réalisation des figures 2 ou 3 portent les mêmes références avec le signe prime.

Seules les parties différentes du premier mode de réalisation sont décrites ci après. Le muret 12' s'étend ici perpendiculairement à l'axe longitudinal des demi-canaux 8', de même que l'évidemment 13' avec lequel il coopère. Entre le muret 12' et l'évidemment 13', il est formé dans la face formant tranche 9' intermédiaire une ouverture 25' oblongue traversante. Une encoche 26' en forme de volet fait saillie dans l'ouverture 25' et sert à bloquer, à l'état assemblé des deux hémi-coquilles, avec l'encoche 26' de l'autre hémi-coquille, un pion sapin fixé d'une part au véhicule, notamment à une cloison ou une paroi de celui ci, et d'autre part à l'agrafe 1' en passant à travers l'ouverture 25' et en ayant ses « branches » de sapin bloquées par les volets 26' de sorte que le pion sapin ne peut plus sortir de soi même de sa liaison avec l'agrafe et l'agrafe et les barreaux qu'elle reçoit sont ainsi solidarisé au véhicule.

Dans le mode de réalisation des figures 2 et 3, cette immobilisation de l'agrafe 1 au véhicule peut se faire par un pion comportant des moyens de réception avec encliquetage de l'enveloppe extérieure de l'agrafe.

Des rainures 27' sont formées à la surface des demi canaux 8' pour réaliser la même fonction que la couche d'élastomère dans le mode de réalisation des figures 2 et 3, c'est à dire empêcher que les barreaux subissent une rotation ou un glissement longitudinal. On pourrait à la place prévoir également une couche d'élastomère.

En particulier, les deux modes de réalisation de l'agrafe peuvent être combinées en prenant certaines caractéristiques de l'un et d'autres caractéristiques de l'autre pour obtenir d'autres modes de réalisation possibles de l'invention et inclus dans celle ci. Par exemple on pourrait prévoir un mode de réalisation comportant outre un muret identique au muret 12, également un muret 12' et des évidemment 13 et 13' associés, et ceci peut être réalisé avec ou sans une ouverture 25' centrale.

## Revendications

1. Système de liaison entre deux points à grande distance l'un de l'autre d'un véhicule automobile, notamment entre le moteur (30) à l'avant et une batterie (40) à l'arrière du véhicule, qui comporte au moins deux câbles s'étendant chacun suivant un trajet respectif entre les deux points en ayant au moins des tronçons de trajet en commun, **caractérisé en ce que** les au moins deux câbles (20, 21) sont des barreaux rigides et ont des sections transversales respectives circulaires, et les deux câbles sont maintenus le long du ou des tronçons de trajet en commun par une pluralité de manchons (60, 61, 62, 63, 64, 65) de rigidification de manière à lutter contre le fléchissement des câbles.

2. Système suivant la revendication 1, caractérisé en que les manchons sont identiques les uns aux autres.

3. Système suivant la revendication 1 ou 2, caractérisé en que les deux barreaux s'étendent entre le moteur et une batterie à l'arrière du véhicule.

4. Système suivant l'une des revendications 1 à 3, **caractérisé en ce que** les deux barreaux s'étendent au moins sur certains tronçons le long d'une paroi du véhicule et y sont fixés par des manchons fixés eux mêmes par des pions solidaires du véhicule.

5. Système suivant l'une des revendications précédentes, **caractérisé en ce que** chaque manchon comporte un corps principal et un couvercle, pouvant être fixés l'un à l'autre de manière amovible et au moins deux canaux de section transversale circulaire sont formés à l'intérieur du manchon en le traversant de part et d'autre lorsque le couvercle est fixé sur le corps principal.

6. Système suivant la revendication 5, **caractérisé en ce que** les deux canaux sont mutuellement parallèles.

7. Système suivant l'une des revendications 5 à 6, **caractérisé en ce que** le corps et le couvercle sont identiques et sont sous la forme de deux hémi-coquilles.

8. Système suivant la revendication 7, **caractérisé en ce que** des moyens de fixation amovible des deux hémi-coquilles sont constitués par des moyens d'encliquetage formés par au moins une patte d'encliquetage faisant saillie d'une face de l'hémi-coquille et d'une anse définissant une fente faisant saillie d'une face de l'autre hémi-coquille en regard de ladite face de la première hémi-coquille et permettant l'introduction de la patte d'encliquetage dans l'ouverture de la anse pour maintenir fixées l'une à l'autre les deux hémi-coquilles face contre face pour obtenir le manchon final.

9. Système suivant la revendication 7 ou 8, **caractérisé en ce que** chaque hémi-coquille est constituée d'un corps dans lequel sont formés deux demi-canaux de section transversale semi-circulaire, les deux demi-canaux étant séparés par une face formant une tranche intermédiaire et un muret fait saillie de la tranche intermédiaire, notamment sur sensiblement la moitié de la longueur de cette tranche intermédiaire, tandis qu'une cavité est formée dans sensiblement le reste de la tranche intermédiaire, la cavité ayant une forme complémentaire de celle du muret pour permettre au muret de l'autre hémi-coquille de s'emboîter dans la cavité de l'autre hémi-coquille, de sorte que lorsque les deux hémi-coquilles sont amenées face contre face, le muret d'une hémi-coquille pénètre dans la cavité de l'autre hémi-coquille supérieure, tandis que le muret de l'hémi-coquille supérieure pénètre dans la cavité de ladite hémi-coquille.

## Patentansprüche

1. Verbindungssystem zwischen zwei von einander weit entfernten Punkten eines Kraftfahrzeugs, insbesondere zwischen dem Motor (30) im Frontbereich und einer Batterie (40) im Heckbereich des Fahrzeugs, das mindestens zwei Kabel umfasst, wobei sich ein jedes Kabel längs einer zugeordneten zwischen den entfernten Punkten verlaufenden Strecke erstreckt und die Kabel wenigstens Streckenabschnitte gemeinsam haben, **dadurch gekennzeichnet, dass** die mindestens zwei Kabel (20; 21) starre Stangen sind und jeweils kreisförmige Querschnitte aufweisen und die zwei Kabel längs des gemeinsamen Streckenabschnitts oder der gemeinsamen Streckenabschnitte durch eine Vielzahl Hülsen (60; 61; 62; 63; 64; 65) zur Versteifung so gehalten werden, dass der Durchbiegung der Kabel entgegengewirkt wird.

2. System nach Anspruch 1, **dadurch gekennzeichnet, dass** die Hülsen untereinander identisch sind.

3. System nach Anspruch 1 oder 2, **dadurch gekennzeichnet, dass** sich die Stangen zwischen dem Motor und einer Batterie im Heckbereich des Fahrzeugs erstrecken.

4. System nach einem der Ansprüche 1 bis 3, **dadurch gekennzeichnet, dass** sich die beiden Stangen mindestens über mehrere Streckenabschnitte längs einer Wand des Fahrzeugs erstrecken und mittels Hülsen daran befestigt sind, wobei die Hülsen selbst mittels fest mit dem Fahrzeug verbundenen Stiften befestigt sind.

5. System nach einem der vorhergehenden Ansprüche, **dadurch gekennzeichnet, dass** jede Hülse einen Hauptkörper und einen Deckel, die beweglich aneinander befestigt werden können, umfasst, und mindestens zwei Kanäle mit kreisförmigem Querschnitt im Innern der Hülse gebildet sind, die die Hülse von beiden Seiten durchziehen, wenn der Deckel auf dem Hauptkörper befestigt ist.

6. System nach Anspruch 5, **dadurch gekennzeichnet, dass** die beiden Kanäle zueinander parallel sind.

7. System nach einem der Ansprüche 5 bis 6, **dadurch gekennzeichnet, dass** der Körper und der Deckel identisch sind und die Form von zwei Halbschalen aufweisen.

8. System nach Anspruch 7, **dadurch gekennzeichnet, dass** bewegliche Befestigungsmittel der beiden Halbschalen aus Einrastmitteln gebildet sind, die von mindestens einer Einrastlasche, die auf einer Fläche der Halbschale hervorsteht, und einem Spalt gebildet sind, der auf einer Fläche der anderen Halbschale gegenüber der Fläche der ersten Halbschale hervorsteht, gebildet sind, und so das Einführen der Einrastlasche in die Öffnung des Bügels möglich ist, um die beiden Halbschalen untereinander und Fläche gegen Fläche befestigt zu halten, um so die Hülse zu bilden.

9. System nach Anspruch 7 oder 8, **dadurch gekennzeichnet, dass** jede Halbschale aus einem Körper besteht, in dem zwei Halbkanäle halbkreisförmigen Querschnitts gebildet sind, wobei die beiden Halbkanäle durch eine einen Zwischenabschnitt bildende Fläche getrennt sind und eine Zwischenwand aus dem Zwischenabschnitt insbesondere über im Wesentlichen der Hälfte der Länge dieses Zwischenabschnitts hervorsteht, wogegen eine Aussparung im Wesentlichen im verbleibenden Bereich des Zwischenabschnitts ausgebildet ist und eine Form aufweist, die komplementär zur Form der Zwischenwand der anderen Halbschale ist, um das Eingreifen der Zwischenwand der anderen Halbschale in die Aussparung der jeweils anderen Halbschale so zu ermöglichen, dass die Zwischenwand einer Halbschale in die Aussparung der anderen oberen Halbschale eindringt, während die Zwischenwand der oberen Halbschale in die Aussparung der anderen Halbschale eindringt, wenn die beiden Halbschalen in Stellung Fläche gegen Fläche gebracht sind.

## Claims

1. A system for linking two points a long distance apart from one another of a motor vehicle, in particular between the engine (30) at the front and a battery (40) at the rear of the vehicle, which comprises at least two cables each extending along a respective path between the two points having at least path sections in common, **characterised in that** the at least two cables (20, 21) are rigid bars and have respective circular transverse sections, and the two cables are held along the path section or sections in common by a plurality of stiffening sleeves (60, 61, 62, 63, 64, 65) such as to combat the bending of the cables.

2. The system according to Claim 1, **characterised in that** the sleeves are identical to one another.

3. The system according to Claim 1 or 2, **characterised in that** the two bars extend between the engine and a battery at the rear of the vehicle.

4. The system according to any of Claims 1 to 3, **characterised in that** the two bars extend, at least over certain sections, along a wall of the vehicle and are fixed here by sleeves which are themselves fixed by pins which are joined to the vehicle.

5. The system according to any of the preceding claims, **characterised in that** each sleeve comprises a main body and a cover which can be fixed to one another detachably and at least two channels with a circular cross-section are formed within the sleeve, crossing it from one side to the other when the cover is fixed on the main body.

6. The system according to Claim 5, **characterised in that** the two channels are parallel to one another.

7. The system according to either of Claims 5 to 6, **characterised in that** the body and the cover are identical and are in the form of two half-shells.

8. The system according to Claim 7, **characterised in that** detachable fixing means of the two half-shells are comprised of clip-on means formed by at least one clip-on tab protruding from one face of the half-shell and of a loop defining a slot protruding from a face of the other half-shell facing said face of the first half-shell and allowing the clip-on tab to be introduced into the opening of the loop to keep the two half-shells fixed to one another face to face so as to obtain the final sleeve.

9. The system according to Claim 7 or 8, **characterised in that** each half-shell is comprised of a body in which are formed two half-channels with a semi-circular cross-section, the two half-channels being separated by a face forming an intermediate slice and a wall protrudes from the intermediate slice, in particular over substantially half the length of this intermediate slice, whereas a cavity is formed in substantially the rest of the intermediate slice, the cavity having a form that complements that of the wall so as to allow the wall of the other half-shell to slot into the cavity of the other half-shell such that, when the two half-shells are brought face to face, the wall of a half-shell penetrates into the cavity of the other upper half-shell, whereas the wall of the upper half-shell penetrates into the cavity of said half-shell.
